# EUROPEAN PATENT SPECIFICATION

(11) **EP 3 252 913 B1**
(45) Date of publication and mention of the grant of the patent: **12.12.2018**
(21) Application number: 16172355.6
(22) Date of filing: 01.06.2016
(51) Int. Cl.: H02J 7/00, B62B 3/14

(54) **SYSTEM FOR ELECTRICAL CHARGING OF SHOPPING CARTS EQUIPPED WITH ELECTRICAL DEVICES**
SYSTEM ZUM ELEKTRISCHEN LADEN VON MIT ELEKTRISCHEN VORRICHTUNGEN AUSGESTATTETEN EINKAUFSWAGEN
SYSTÈME POUR CHARGER ÉLECTRIQUEMENT DES CHARIOTS DE SUPERMARCHÉ ÉQUIPÉS DE DISPOSITIFS ÉLECTRIQUES

(43) Date of publication of application: 06.12.2017
(73) Proprietor: Smartcart Oy, 01510 Vantaa (FI)
(72) Inventor: Heiman, Petteri, 00220 Helsinki (FI); Hirn, Mikael, 00730 Helsinki (FI)
(74) Representative: Suominen, Kaisa Liisa

(56) References cited:
- DE-U1-202006 000 074
- US-A- 5 773 954
- US-A1- 2008 231 228
- US-A1- 2013 335 023
- US-A1- 2014 224 875

## Description

### TECHNICAL FIELD

The present disclosure relates generally to charging smart shopping carts, and more specifically, to a system for electrical charging of shopping carts equipped with electrical devices.

### BACKGROUND

In a retail store or grocery store, shoppers typically push a shopping cart through aisles while selecting items of merchandise as per their shopping lists. When the shoppers finish with selecting and placing items in the shopping car as per their shopping lists, they proceed to a cash register/data terminal in a check-out area of the store to make the payment. Retailers continuously struggle to efficiently allocate human resources and available computing power to perform operational and point-of-sale tasks. Traditionally, such tasks are resource intensive and they entail significant expenditures of time and money at each retail outlet. To address this problem of retailers and to also make the experience simpler for shoppers, smart shopping carts have been introduced at retail stores.

A smart shopping cart has one or more electric devices integrated with the shopping cart. The one or more electric devices can be used for tracking the location of the cart, automated billing, etc. Such an electric device may include a barcode scanner, a weight sensor, a location sensor etc. The barcode scanner may scan barcodes of items placed in the shopping cart. The smart shopping cart may also include a display that shows the total price of items placed, thus making it easy for shoppers to budget their shopping. It may also compare the items placed in the smart shopping cart with a user's shopping list, and tick items off the list once placed. An integrated battery typically powers the one or more electric devices. Document US 5773954 discloses a charging arrangement for a shopping cart w here electricity is provided to a shopping cart via a connection element of the shopping cart and a conducting material in a guide rail of a conduction station. Document US 2014/0224875 discloses a shelf power system having a power track and a connection plug. The connecting plug has an attachment mechanism to attach to a shelf bracket and is configured to electrically connect to the power track. The connection plug may have prongs that electrically contact conductors in the power track. Document US 2008/0231228 presents a bi-directional charging unit wherein a casing with an opening is arranged in the charging profile. A force is applied to a rail plate by a spring. The rail plate provides electricity to a contact plate of the shopping cart. Document DE 20 2006 000 074 U1 relates to a shopping cart that is charged via an electrical contact bush which is electrically connected to a corresponding chain, which chain is electrically conducting, as is the corresponding locking pin. The locking pins, chains, locking boxes and contact bushes thus form an electrically conducting circuit which is connected to the second pole of the voltage source. Document US 2013/0335023 presents a contact charging system for vehicle-mounted batteries. A plurality of electrical contacts are coupled to the vehicle and at least one of the plurality of electrical contacts is electrically connected to the battery. There are also a plurality of electrical power transfer components of which at least on rotates.

A major problem with such existing smart shopping carts lies with transferring electricity to charge the integrated battery used to power the electric devices. Wired chargers used to charge the integrated battery cause a substantial amount of friction, and wear and tear. Therefore, in light of the foregoing discussion, there exists a need to overcome the aforementioned drawbacks in existing approaches for charging a battery used to power the electric devices in a smart shopping cart, due to friction.

### SUMMARY

The present disclosure seeks to provide a system for electrical charging of shopping carts equipped with electrical devices.

In one aspect, an embodiment of the present disclosure provides a system for electrical charging of shopping carts equipped with electrical devices. The system comprises (a) an electrical charging station comprising a charging profile made of an electrically insulating material and a charging element made of an electrically conducting material, wherein the charging profile is arranged to partially cover the charging element, and (b) at least one shopping cart comprising an electrical device and a conductor arrangement electrically connected to the electrical device, wherein the conductor arrangement comprises (i) a casing comprising a first part comprising an opening and a second part arranged to be in contact with the shopping cart, and (ii) a conductor spring, a spring support and a conductor arranged inside the casing, wherein the conductor spring and the conductor are arranged in electrical contact with each other, and wherein the conductor is arranged to be in contact with the charging element of the electrical charging station through the opening of the first part of the casing, the conductor spring is arranged to allow movement of the conductor inside the casing and the conductor comprises a cylindrical part and a bearing allowing movement of the cylindrical part.

Embodiments of the present disclosure substantially eliminate or at least partially address the aforementioned problems in the prior art, and enable wireless charging of one or more electric devices associated with a smart shopping cart with minimum friction.

Additional aspects, advantages, features and objects of the present disclosure are made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
FIG. 1 is an exemplary view of a system for electrical charging of a shopping cart that is equipped with an electrical device that includes an electrical charging station and a conductor arrangement electrically connected to the electrical device, in accordance with an embodiment of the present disclosure;
FIG. 2A is an exploded view of the conductor arrangement of FIG. 1, in accordance with an embodiment of the present disclosure;
FIG. 2B is a sectional view of the conductor arrangement of FIG. 1, in accordance with an embodiment of the present disclosure;
FIG. 3 is a schematic illustration of a crimp connector that is connected to a conductor spring in the conductor arrangement of FIG. 1, in accordance with an embodiment of the present disclosure;
FIG.4 is a schematic illustration of the parts of the electrical charging station that is connected to tubular structures in the electrical charging station of FIG. 1, in accordance with an embodiment of the present disclosure;
FIG. 5 is a schematic illustration of a conductor in the conductor arrangement connected to a charging element of the electrical charging station of FIG. 1, in accordance with an embodiment of the present disclosure; and
FIG. 6 is a schematic electrical diagram of the electrical charging station that is adapted to conduct electrical power to charge the electrical devices that are mounted on the shopping cart of FIG. 1, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

The system comprises an electrical charging station comprising a charging profile made of an electrically insulating material and a charging element made of an electrically conducting material. As will be discussed below, the charging station can be arranged in connection with a storage station of the shopping carts, and it typically has a self-standing structure made for example from metallic tubes. The charging profile is arranged to partially cover the charging element for electrical insulation.

The system also comprises at least one shopping cart comprising an electrical device and a conductor arrangement electrically connected to the electrical device. The electrical device can be any electrical device used in connection with shopping carts, such as a bar code scanner, a display connected to an information system of the shop etc. The conductor arrangement is electrically connected to the electrical device, i.e. it allows electricity from the charging station to be transferred to the electrical device for charging it.

The conductor arrangement comprises a casing that comprises a first part comprising an opening and a second part arranged to be in contact with the shopping cart. The conductor arrangement also comprises a conductor spring, a spring support and a conductor arranged inside the casing, wherein the conductor spring and the conductor are arranged in electrical contact with each other, to allow transfer of electricity. Indeed, the conductor is arranged to be in contact with the charging element of the electrical charging station through the opening of the first part of the casing, i.e. in electrical contact with it, the conductor spring is arranged to allow movement of the conductor inside the casing and the conductor comprises a cylindrical part and a bearing allowing movement of the cylindrical part.

The present disclosure thus provides a system that reduces friction between the electrical charging station and the conductor attached to the shopping cart and provides wireless charging solution to the shopping carts. As friction is reduced, the wear and tear is also reduced. Indeed, the conductor spring acts both as a spring and a conducting element, thus compensating the positioning of the shopping cart in the electrical charging station, the possible misalignment of the electrical charging station, and the wear of wheels of the shopping cart. In the system, the charging profile is an insulator, so that the charging profile does not conduct electricity to the structure of the electrical charging station.

The conductor comprises a cylindrical part and a bearing that allows movement of the cylindrical part. The conductor is preferably made of an electrically conductive material, such as metal. It is also possible to make it from an insulating material, provided that it can still be in electrical contact with the conductor spring and the electrical device, to transfer electricity from the loading system to the electrical device of the shopping cart.

According to another embodiment, the conductor spring is arranged to allow the conductor to move towards and away from the charging element. This movement allows for the system to work even when the shopping cart is slightly misaligned and if the parts of the system are slightly worn out.

According to another embodiment, the conductor arrangement is arranged in a handle of the shopping cart. The conductor arrangement may also be arranged at another position of the shopping cart, such as the wheel or wheels or the base of the shopping cart. The handle is however preferred, as it is far away from ground (i.e. further away from dust, rocks and snow, for example), and it is also believed that it is easier for the user to position the shopping cart into a storage station comprising the electrical charging system, when the alignment is made using the handle. Indeed, according to an embodiment, the electrical charging station is arranged in a storage station of the shopping carts. Such a combination has the advantage that the shopping carts are typically automatically returned to the charging station and hence no additional steps are needed from the shop personnel.

The conductor arrangement is electrically connected to the electrical device. According to an embodiment, this is achieved with the conductor arrangement further comprising a crimp connector connecting the conductor spring with an electrical wire for transferring electricity to the electrical device. The electrical wires are preferably arranged inside the casing of the conductor arrangement, and suitably covered between the conductor arrangement and the electrical device.

According to an embodiment, the charging element is made of metal. For example, the charging element can be made of copper, aluminium or stainless steel. According to another embodiment, the charging profile is made of an insulating plastic material. The plastic material may be any suitable material, such as polyethylene, polypropylene, polyamide etc. The charging profile could also be made of another type of material, such as wood, if desired.

According to an embodiment, each shopping cart comprises a first conductor arrangement comprises a first polarity and a second conductor arrangement comprises a second polarity that is opposite to the first polarity. According to another embodiment, the conductor arrangements are arranged at opposing sides of the handle of the shopping cart. This embodiment allows the system to work also with shopping carts not comprising metallic wheels that are in contact with the ground. The two conductor arrangements can also be placed in such a manner that one is arranged in the handle and the other in another part of the shopping cart, as discussed above. The electrical path between the two conductor arrangements is of course insulated such that the user cannot get electric shocks. For example, the conductor arrangement on a left side of the shopping cart comprises a positive polarity and the conductor arrangement on a right side of the shopping cart comprises a negative polarity.

According to yet another embodiment, the charging profile is attachable by attachment means and the charging element is attachable to the charging profile via the form of the charging profile. The attachment means can be any suitable mans, such as screws, rivets, nails or glue. The charging profile has a form that allows the charging element to be sled into it, such as a C-profile. This allows for the charging profile to have a smooth surface, which further reduces friction when the shopping carts are positioned in the charging system and removed from it.

According to another embodiment, the electrical charging station further comprises a guide element arranged to lock the charging element into place. The guide element is typically placed at the extremity of the charging element, and can be attached by any suitable means. Its function is to lock the charging element into place, especially when the charging element is attached only via the form of the charging profile, and to help guide the shopping carts into the system.

### DETAILED DESCRIPTION OF THE DRAWINGS

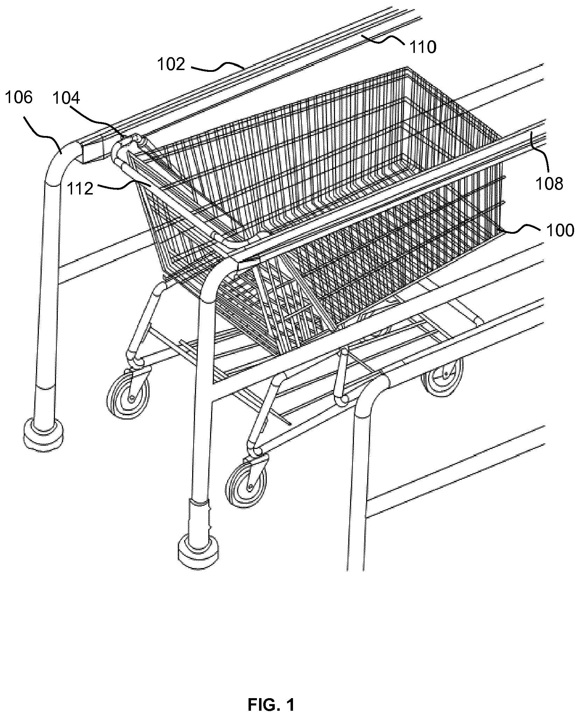

FIG. 1 is an exemplary view of a system for electrical charging of a shopping cart 100 that is equipped with an electrical device that includes at least one electrical charging station 102 and a conductor arrangement 104 electrically connected to the electrical device, in accordance with an embodiment of the present disclosure. The electrical charging station 102 may be arranged in a storage station of the shopping cart 100. The storage station includes a plurality of tubular structures 106. The electrical charging station 102 includes a charging profile 108 made of an electrically insulating material (e.g., plastic) and a charging element 110 made of an electrically conducting material (e.g., copper). The electrical charging station 102 (e.g., charging rail) is attached to the plurality of tubular structures 106. The conductor arrangement 104 may be attached to a handle 112 of the shopping cart 100, one on each end.

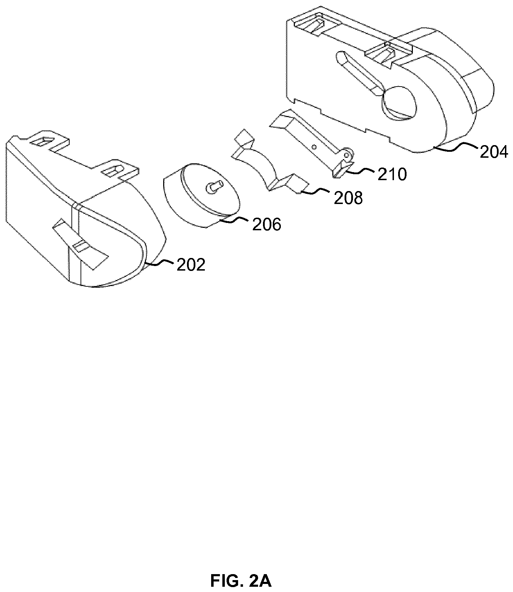

FIG. 2A is an exploded view of the conductor arrangement 104 of FIG. 1, in accordance with an embodiment of the present disclosure. The conductor arrangement 104 comprises a casing that includes a first part 202 and a second part 204, a conductor 206, a conductor spring 208, and a spring support 210. The first part 202 and the second part 204 of the casing enclose all the components of the conductor arrangement 104. The second part 204 of the casing is arranged to be in contact with the handle 112 of the shopping cart 100. The conductor 206 is arranged to be in contact with the charging element 110 of the electrical charging station 102 through an opening of the first part 202 of the casing. The conductor spring 208 is arranged to be in electrical contact with the conductor 206. The spring support 210 provides support to the conductor spring 208 inside the casing.

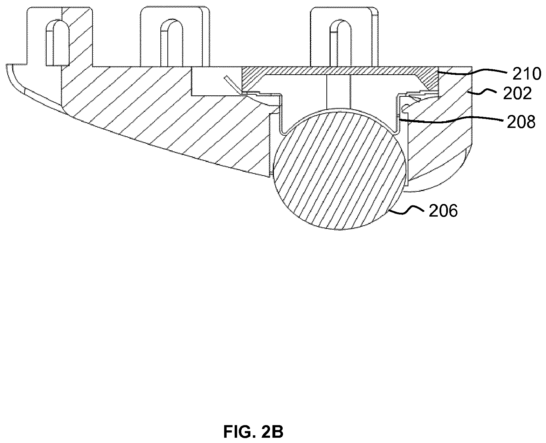

FIG. 2B is a sectional view of the conductor arrangement 104 of FIG. 1, in accordance with an embodiment of the present disclosure. The conductor 206 comprises a cylindrical part and a bearing that allows movement of the cylindrical part of the conductor 206. The conductor 206 and the conductor spring 208 transfer the electricity from the electrical charging station 102 to the electrical device.

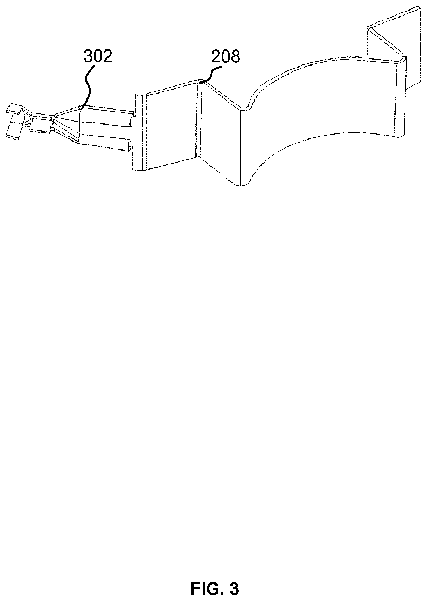

FIG. 3 is a schematic illustration of a crimp connector 302 that is connected to the conductor spring 208 in the conductor arrangement 104 of FIG. 1, in accordance with an embodiment of the present disclosure. The crimp connector 302 connects a wire inside the second part 204 of the casing that is arranged to be in contact with the shopping cart 100 with the conductor spring 208. The crimp connector 302 transfers electricity from the conductor spring 208 to the wire inside the second part 204 of the casing.

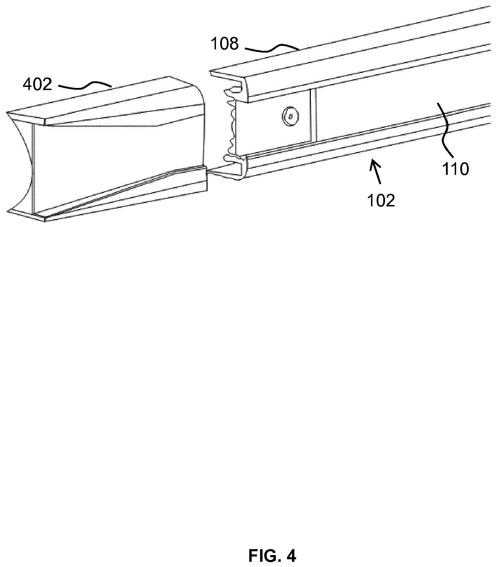

FIG.4 is a schematic illustration of the parts of the electrical charging station 102 that is connected to the tubular structures 106 in the electrical charging station 102 of FIG. 1, in accordance with an embodiment of the present disclosure. The electrical charging station 102 includes a guide element 402 that is attached to the tubular structures 106. The guide element 402 is arranged to lock the charging element 110 within the charging profile 108. The charging profile 108 is attached to the tubular structures 106 by attachment means (e.g. one or more rivets) and the charging element 110 is attached to the charging profile 108 by the form of the charging profile 108.

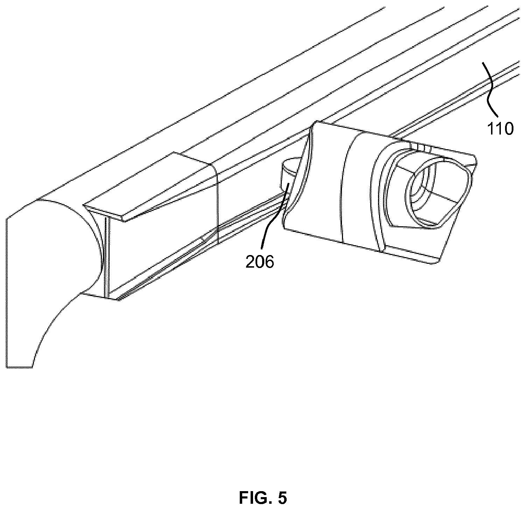

FIG. 5 is a schematic illustration of the conductor 206 in the conductor arrangement 104 connected to the charging element 110 of the electrical charging station 102 of FIG. 1, in accordance with an embodiment of the present disclosure. The conductor 206 is arranged to be in contact with the charging element 110 of the electrical charging station 102 that allows the charging of the electrical device that is mounted on the shopping cart 100 or on a part of it. The conductor spring 208 inside the casing is arranged to allow movement of the conductor 206 towards and away from the charging element 110 of the electrical charging station 102.

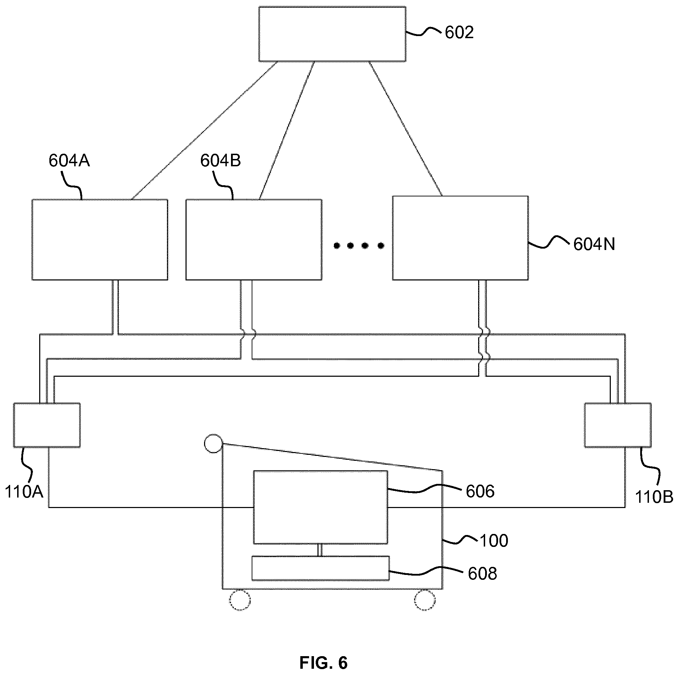

FIG. 6 is a schematic electrical diagram of the electrical charging station 102 that is adapted to conduct electrical power to charge the electrical devices that are mounted on the shopping cart 100 of FIG. 1, in accordance with an embodiment of the present disclosure. The schematic electrical diagram of the electrical loading station 102 comprises a power source 602, a plurality of AC to DC converters 604A-N, a step down transformer 606 and an electrical device 608. The plurality of AC to DC converters 604A-N receive 230V AC power from the power source 602. The plurality of AC to DC converters 604A-N convert 230V AC power to 12V DC and transmit to the electrical charging station 102. The charging element 110 of the electrical charging station 102 receives 12V DC from the plurality of AC to DC converters 604A-N, and conducts 12V DC power in the charging element 110. The charging element 110 comprises a positive charging element 110A on a left side of the electrical charging station 102 to conduct a positive charge, and a negative charging element 110B on a right side of the electrical charging station 102 to conduct a negative charge. The step down transformer 606 is arranged to be in contact with the positive charging element 110A and the negative charging element 110B. The step down transformer 606 receives 12V DC power from the positive charging element 110A and the negative charging element 110B and converts 12V DC to 5V DC to charge the electrical device 608. The electrical device 608 is coupled with the step down transformer 606 for charging means.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A system for electrical charging of shopping carts (100) equipped with electrical devices (608), comprising
(a) an electrical charging station (102) comprising a charging profile (108) made of an electrically insulating material and a charging element (110) made of an electrically conducting material, wherein the charging profile is arranged to partially cover the charging element, and
(b) at least one shopping cart comprising an electrical device and a conductor arrangement (104) electrically connected to the electrical device, wherein the conductor arrangement comprises
(i) a casing comprising a first part (202) comprising an opening and a second part (204) arranged to be in contact with the shopping cart, and
(ii) a conductor spring (208), a spring support (210) and a conductor (206) arranged inside the casing, wherein the conductor spring and the conductor are arranged in electrical contact with each other,
**characterised in that** conductor is arranged to be in contact with the charging element of the charging station through the opening of the first part of the casing, the conductor spring is arranged to allow movement of the conductor inside the casing, and the conductor comprises a cylindrical part and a bearing allowing movement of the cylindrical part.

2. A system according to claim 1, wherein the conductor spring (208) is arranged to allow movement of the conductor (206) towards and away from the charging element (110).

3. A system according to any of the preceding claims, wherein the conductor arrangement (104) is arranged in a handle (112) of the shopping cart (100).

4. A system according to any of the preceding claims, wherein the conductor arrangement (104) further comprises a crimp connector (302) connecting the conductor spring (208) with an electrical wire for transferring electricity to the electrical device (608).

5. A system according to claim 3, wherein the charging station (102) is arranged in a storage station of the shopping carts (100).

6. A system according to any of the preceding claims, wherein the charging element (110) is made of a material selected from the group consisting of copper, aluminium and stainless steel.

7. A system according to any of the preceding claims, wherein the charging profile (108) is made of an insulating plastic material.

8. A system according to any of the preceding claims, wherein each shopping cart (100) comprises a first conductor arrangement having a first polarity and a second conductor arrangement having a second polarity opposite the first polarity.

9. A system according to claim 8, wherein the conductor arrangements are arranged at opposing sides of the handle (112) of the shopping cart (100).

10. A system according to any of the preceding claims, wherein the charging profile (108) is attachable by attachment means and the charging element (110) is attachable to the charging profile via the form of the charging profile, and the charging station (102) further comprises a guide element (402) arranged to lock the charging element into place.

## Patentansprüche

1. System zum elektrischen Laden von Einkaufswagen (100), die mit elektrischen Vorrichtungen (608) ausgestattet sind, umfassend
(a) eine elektrische Ladestation (102), umfassend ein Ladeprofil (108), das aus einem elektrisch isolierenden Material hergestellt ist, und ein Ladeelement (110), das aus einem elektrisch leitenden Material hergestellt ist, wobei das Ladeprofil so angeordnet ist, dass es das Ladeelement teilweise bedeckt, und
(b) mindestens einen Einkaufswagen, welcher eine elektrische Vorrichtung und eine Leiteranordnung (104) umfasst, die mit der elektrischen Vorrichtung elektrisch verbunden ist, wobei die Leiteranordnung umfasst
(i) ein Gehäuse, umfassend einen ersten Teil (202), der eine Öffnung umfasst, und einen zweiten Teil (204), der so angeordnet ist, dass er mit dem Einkaufswagen in Kontakt steht, und
(ii) eine Leiterfeder (208), eine Federhalterung (210) und einen Leiter (206), der innerhalb des Gehäuses angeordnet ist, wobei die Leiterfeder und der Leiter in elektrischem Kontakt miteinander angeordnet sind,
**dadurch gekennzeichnet, dass** der Leiter so angeordnet ist, dass er durch die Öffnung des ersten Teils des Gehäuses mit dem Ladeelement der Ladestation in Kontakt steht, die Leiterfeder so angeordnet ist, dass sie eine Bewegung des Leiters innerhalb des Gehäuses ermöglicht, und der Leiter einen zylindrischen Teil und ein Lager umfasst, welches eine Bewegung des zylindrischen Teils ermöglicht.

2. System nach Anspruch 1, wobei die Leiterfeder (208) so angeordnet ist, dass sie eine Bewegung des Leiters (206) auf das Ladeelement (110) zu und von diesem weg ermöglicht.

3. System nach einem der vorhergehenden Ansprüche, wobei die Leiteranordnung (104) in einem Griff (112) des Einkaufwagens (100) angeordnet ist.

4. System nach einem der vorhergehenden Ansprüche, wobei die Leiteranordnung (104) ferner einen Quetschverbinder (302) umfasst, welcher die Leiterfeder (208) mit einem elektrischen Draht verbindet, um Elektrizität auf die elektrische Vorrichtung (608) zu übertragen.

5. System nach Anspruch 3, wobei die Ladestation (102) in einer Abstellstation der Einkaufswagen (100) angeordnet ist.

6. System nach einem der vorhergehenden Ansprüche, wobei das Ladeelement (110) aus einem Material hergestellt ist, ausgewählt aus der Gruppe, bestehend aus Kupfer, Aluminium und Edelstahl.

7. System nach einem der vorhergehenden Ansprüche, wobei das Ladeprofil (108) aus einem isolierenden Kunststoffmaterial hergestellt ist.

8. System nach einem der vorhergehenden Ansprüche, wobei jeder Einkaufswagen (100) eine erste Leiteranordnung mit einer ersten Polarität und eine zweite Leiteranordnung mit einer zweiten Polarität umfasst, die der ersten Polarität entgegengesetzt ist.

9. System nach Anspruch 8, wobei die Leiteranordnungen auf gegenüberliegenden Seiten des Griffs (112) des Einkaufswagens (100) angeordnet sind.

10. System nach einem der vorhergehenden Ansprüche, wobei das Ladeprofil (108) durch Befestigungsmittel zu befestigen ist und das Ladeelement (110) durch die Form des Ladeprofils an dem Ladeprofil zu befestigen ist und die Ladestation (102) ferner ein Führungselement (402) umfasst, welches so angeordnet ist, dass das Ladeelement in seiner Position verrastet wird.

## Revendications

1. Système destiné à la recharge électrique de chariots de supermarché (100) équipés de dispositifs électriques (608), comprenant :
(a) une station de recharge électrique (102) comprenant un profil de recharge (108) fabriqué en un matériau électriquement isolant et un élément de recharge (110) fabriqué en un matériau électriquement conducteur, le profil de recharge étant agencé de façon à recouvrir partiellement l'élément de recharge, et
(b) au moins un chariot de supermarché comprenant un dispositif électrique et un agencement conducteur (104) électriquement connecté au dispositif électrique, l'agencement conducteur comprenant :
(i) un boîtier comprenant une première partie (202) comprenant une ouverture et une seconde partie (204) agencée de façon à être en contact avec le chariot de supermarché, et
(ii) un ressort de conducteur (208), un support de ressort (210) et un conducteur (206) agencés à l'intérieur du boîtier, le ressort de conducteur et le conducteur étant agencés en contact électrique l'un avec l'autre,
**caractérisé en ce que** le conducteur est agencé de façon à être en contact avec l'élément de recharge de la station de recharge, en passant par l'ouverture de la première partie du boîtier, le ressort de conducteur est agencé de façon à permettre un déplacement du conducteur à l'intérieur du boîtier, et le conducteur comprenant une partie cylindrique et un support permettant le déplacement de la partie cylindrique.

2. Système selon la revendication 1, dans lequel le ressort de conducteur (208) est agencé de façon à permettre le déplacement du conducteur (206) vers l'élément de recharge (110) et à partir de ce dernier.

3. Système selon l'une quelconque des revendications précédentes, dans lequel l'agencement conducteur (104) est agencé dans une poignée (112) du chariot de supermarché (100).

4. Système selon l'une quelconque des revendications précédentes, dans lequel l'agencement conducteur (104) comprend en outre un raccord à sertir (302) connectant le ressort de conducteur (208) à un fil électrique, pour transférer de l'électricité au dispositif électrique (608).

5. Système selon la revendication 3, dans lequel la station de recharge (102) est agencée dans une station de rangement des chariots de supermarché (100).

6. Système selon l'une quelconque des revendications précédentes, dans lequel l'élément de recharge (110) est fabriqué en un matériau choisi dans le groupe consistant en le cuivre, l'aluminium et l'acier inoxydable.

7. Système selon l'une quelconque des revendications précédentes, dans lequel le profil de recharge (108) est fabriqué en un matériau plastique isolant.

8. Système selon l'une quelconque des revendications précédentes, dans lequel chaque chariot de supermarché (100) comprend un premier agencement conducteur ayant une première polarité et un second agencement conducteur ayant une seconde polarité, opposée à la première polarité.

9. Système selon la revendication 8, dans lequel les agencements conducteurs sont agencés sur les côtés opposés de la poignée (112) du chariot de supermarché (100).

10. Système selon l'une quelconque des revendications précédentes, dans lequel le profil de recharge (108) peut être fixé à l'aide d'un moyen de fixation, et l'élément de recharge (110) peut être fixé au profil de recharge par le biais de la forme du profil de recharge, et la station de recharge (102) comprend en outre un élément de guidage (402) agencé de façon à verrouiller en place l'élément de recharge.
